# FASCICULE DE BREVET EUROPEEN

(11) **EP 4 392 994 B1**
(45) Date de publication et mention de la délivrance du brevet: **13.08.2025**
(21) Numéro de dépôt: 22773274.0
(22) Date de dépôt: 24.08.2022
(51) Int. Cl.: G21F 5/012, G21F 5/06, G21F 5/08

(54) **DISPOSITIF DE RANGEMENT POUR L'ENTREPOSAGE ET/OU LE TRANSPORT D'ASSEMBLAGES DE COMBUSTIBLE NUCLEAIRE, PRÉSENTANT UNE CONCEPTION À RÉSISTANCE MÉCANIQUE AMÉLIORÉE**
SPEICHERVORRICHTUNG, AUSGEBILDET ZUR VERBESSERTEN MECHANISCHEN FESTIGKEIT, ZUR VORÜBERGEHENDEN LAGERUNG UND/ODER ZUM TRANSPORT VON KERNBRENNELEMENTEN
STORAGE DEVICE, DESIGNED FOR IMPROVED MECHANICAL STRENGTH, FOR TEMPORARILY STORING AND/OR FOR TRANSPORTING NUCLEAR FUEL ASSEMBLIES

(30) Priorité: 24.08.2021 FR 2108867
(43) Date de publication de la demande: 03.07.2024
(73) Titulaire: ORANO NUCLEAR PACKAGES AND SERVICES, 78180 Montigny-le-Bretonneux (FR)
(72) Inventeur: DELAGE, Olivier, 78340 Les Clayes-sous-Bois (FR); BESSIS, Nicolas, 78600 Maisons-Laffitte (FR)
(74) Mandataire: Brevalex
(86) Numéro de dépôt international: PCT/FR2022/051604
(87) Numéro de publication internationale: WO 2023/026013

(56) Documents cités:
- WO-A1-2021/058887
- US-A- 4 930 650

## Description

### DOMAINE TECHNIQUE

La présente invention se rapporte au domaine du transport et/ou de l'entreposage d'assemblages de combustible nucléaire, de préférence des assemblages usés au sein desquels le combustible a été irradié.

### ETAT DE LA TECHNIQUE ANTERIEURE

Un tel dispositif, également appelé « panier » ou « râtelier » de rangement, comprend une pluralité de logements adjacents chacun apte à recevoir un assemblage de combustible nucléaire.

Ce dispositif de rangement est destiné à être logé dans une cavité d'un emballage. L'emballage, le panier et les assemblages de combustible qui sont placés dans les logements du panier, forment un colis.

Le panier est conçu afin de pouvoir remplir simultanément trois fonctions essentielles, qui vont être brièvement exposées ci-dessous.

Il s'agit tout d'abord de la fonction de transfert thermique de la chaleur dégagée par les assemblages de combustible. Généralement, il est utilisé de l'aluminium ou l'un de ses alliages, en raison de ses bonnes propriétés de conduction thermique.

La seconde fonction concerne l'absorption neutronique, et le souci de maintenir la sous-criticité du colis. Ceci est réalisé en utilisant, au sein du panier, des matériaux absorbeurs de neutrons dits matériaux neutrophages, tels que le bore.

Enfin, la troisième fonction essentielle est relative à la résistance mécanique du dispositif. Il est noté que la résistance mécanique globale du dispositif doit être compatible avec les exigences réglementaires de sûreté pour le transport/entreposage de matières nucléaires, notamment en ce qui concerne les épreuves dites « de chute libre » du colis, selon différentes directions.

De l'art antérieur, il est connu plusieurs manières de former le panier. L'une d'elles consiste à prévoir des structures transversales, telles que des galettes, espacées les unes des autres par des entretoises, selon la direction longitudinale du panier. De plus, des chemises, généralement de section carrée et orientées longitudinalement traversent les structures transversales, et forment chacune un logement pour la réception d'un assemblage de combustible nucléaire.

Les structures transversales, pourvues d'ouvertures traversantes pour le passage des chemises, sont habituellement réalisées d'une seule pièce. En cas d'épreuve réglementaire de chute libre latérale présentant une orientation dite oblique (par exemple à 45°), les structures transversales orientées parallèlement à la direction de chute subissent un impact au niveau d'une partie périphérique en forme de coin, par exemple formant un V d'un angle de 90°, le V correspondant aux coins périphériques des ouvertures traversantes. Cette orientation de chute du colis conduit à solliciter fortement la partie périphérique en forme de V, avec un risque important de déformation conduisant à l'ouverture non-désirée de ce V. Pour éviter ou limiter cette déformation préjudiciable à la certification du colis, les structures transversales peuvent être renforcées en étant surdimensionnées, et/ou en intégrant des éléments de renfort.

Dans tous les cas, cette approche pour réduire les risques de déformation conduit à une augmentation du coût et de la masse des structures transversales, ce qui n'est pas souhaitable.

Le document WO 2021/058887 A1 divulgue un dispositif de rangement pour le transport et/ou l'entreposage d'assemblages de combustible nucléaire selon le préambule de la revendication 1.

### EXPOSÉ DE L'INVENTION

L'invention a donc pour but de remédier aux inconvénients mentionnés ci-dessus, relatif aux réalisations de l'art antérieur.

Pour ce faire, l'invention a pour objet un dispositif de rangement pour le transport et/ou l'entreposage d'assemblages de combustible nucléaire, le dispositif de rangement étant destiné à être logé dans la cavité d'un emballage pour le transport et/ou l'entreposage d'assemblages de combustible nucléaire, et comportant des logements adjacents, chacun destiné à recevoir un assemblage de combustible nucléaire.

De plus, le dispositif de rangement comprend une pluralité de structures transversales espacées les unes des autres selon une direction longitudinale du dispositif de rangement à l'aide de moyens d'espacement comme par exemple des entretoises placées entre les structures transversales, chacune de ces structures transversales étant agencée dans un plan transversal du dispositif de rangement et comprenant chacune plusieurs ouvertures traversantes pour le passage des assemblages de combustible nucléaire.

Selon l'invention, au moins l'une des structures transversales, et de préférence plusieurs voire la totalité d'entre elles, comporte une première pièce ainsi qu'une seconde pièce fixées l'une à l'autre par un dispositif de liaison, le dispositif de liaison comprenant :
- un organe mâle d'accouplement porté par la première pièce, l'organe mâle prenant la forme d'une saillie ;
- un organe femelle d'accouplement prévu sur la seconde pièce, l'organe femelle prenant la forme d'une rainure logeant l'organe mâle et formant avec celui-ci une liaison glissière dont la direction de glissière est parallèle ou inscrite dans le plan transversal dans lequel se trouve la structure transversale concernée.

L'invention prévoit donc de réaliser une ou plusieurs des structures transversales non plus d'un seul tenant, mais avec au moins deux pièces distinctes assemblées l'une à l'autre de la manière exposée ci-dessus. Grâce à l'orientation particulière de la liaison glissière, dans ou parallèlement au plan de la structure transversale qui présente généralement une épaisseur relativement faible, la longueur de coopération entre les organes mâle et femelle d'accouplement qui forment cette liaison peut avantageusement être élevée. Il en résulte avantageusement un renforcement de la tenue mécanique de la structure transversale en cas de chute du colis, et ce sans impacter la masse de la structure transversale.

L'invention prévoit par ailleurs au moins l'une des caractéristiques optionnelles suivantes, prises isolément ou en combinaison.

De préférence, la rainure formant l'organe femelle présente, à l'une de ses deux extrémités longitudinales opposées selon la direction de glissière, une butée axiale de glissière coopérant avec l'une des deux extrémités longitudinales opposées de la saillie formant l'organe mâle.

Ainsi, en cas de chute du colis, la tenue mécanique de la structure transversale est encore davantage renforcée par l'appui entre la butée axiale de glissière, et l'extrémité longitudinale associée de l'organe mâle. Cet appui peut être obtenu directement par construction, ou bien par consommation d'un faible jeu au cours de la chute.

De préférence, la butée axiale de glissière et l'extrémité longitudinale associée de la saillie présentent une complémentarité de forme assurant le maintien de l'extrémité longitudinale de la saillie dans la rainure, selon une direction d'empilement des organes mâle et femelle d'accouplement, la direction d'empilement étant orthogonale à la direction de glissière ainsi qu'à un plan d'ouverture de la rainure. Cet agencement conduit à une conception bilatérale de la liaison glissière.

En cas de chute du colis, la tenue mécanique de la structure transversale est encore davantage renforcée par le maintien de l'extrémité longitudinale de l'organe mâle dans la rainure. La coopération de forme peut être obtenue directement par construction, ou bien par consommation d'un faible jeu au cours de la chute.

Selon une première possibilité, la liaison glissière est de conception unilatérale dans une direction d'empilement des organes mâle et femelle d'accouplement, ces derniers présentant de préférence des formes parallélépipédiques.

Selon une seconde possibilité préférée, la liaison glissière est de conception bilatérale dans une direction d'empilement des organes mâle et femelle d'accouplement, la saillie et la rainure présentant une complémentarité de forme empêchant l'extraction de la saillie en dehors de la rainure via l'ouverture de celle-ci, selon la direction d'empilement des organes mâle et femelle.

Grâce à cette conception bilatérale dans la direction d'empilement des organes mâle et femelle, en cas de chute de l'emballage, la tenue mécanique de la structure transversale est encore davantage renforcée par le maintien de la saillie dans la rainure.

De préférence, la saillie présente deux flancs latéraux opposés présentant une complémentarité de forme avec deux flancs latéraux opposés de la rainure avec lesquels ils coopèrent respectivement, de manière à empêcher l'extraction de la saillie en dehors de la rainure via l'ouverture de celle-ci, dans la direction d'empilement des organes mâle et femelle.

De préférence, la saillie présente une section, dans un plan orthogonal à la direction de glissière, en forme de queue d'aronde, de T, ou de tout ou partie d'un disque.

De préférence, ladite extrémité longitudinale de la saillie, ainsi que ses deux flancs latéraux opposés, présentent un profil continue tout le long d'un contour en U de la saillie.

A titre d'exemple, lorsqu'une forme de queue d'aronde est retenue, chacun des deux flancs latéraux est délardé de manière à faire apparaitre l'angle aigu requis pour l'obtention d'une telle forme en queue d'aronde, et ce même angle aigu est pratiqué à l'extrémité longitudinale de la saillie afin d'assurer une continuité avec chacun des deux flancs latéraux de la saillie, de même forme.

Il en résulte avantageusement une facilité de fabrication pour cette configuration de liaison glissière à maintien renforcé de la saillie dans la rainure.

De préférence, le dispositif de rangement comprend un organe de verrouillage de la liaison glissière, maintenant l'organe mâle relativement à l'organe femelle dans la direction de glissière, l'organe de verrouillage de la liaison glissière étant préférentiellement une vis traversant les organes mâle et femelle. Préférentiellement, la / les vis permettent seulement le maintien en position des deux pièces l'une par rapport à l'autre, mais elles ne sont pas ou que très peu sollicitées lors de l'impact en cas de chute, puisque c'est prioritairement les organes mâle et femelle de la liaison glissière qui reprennent les efforts d'impact.

De préférence, les première et seconde pièces sont deux pièces périphériques de la structure transversale, et, de préférence, délimitant en partie au moins l'une des ouvertures traversantes de cette structure transversale.

De préférence, la première ou la seconde pièce présente une forme générale de poutre droite, dont l'axe central longitudinal de poutre est parallèle ou confondu avec la direction de glissière.

De préférence, ladite structure transversale comporte une troisième pièce agencée de sorte que la seconde pièce soit située entre les première et troisième pièces qu'elle relie à l'aide d'un autre dispositif de liaison, cet autre dispositif de liaison comprenant :
- un organe mâle d'accouplement porté par la troisième pièce, l'organe mâle prenant la forme d'une saillie ;
- un organe femelle d'accouplement prévu sur la seconde pièce, l'organe femelle prenant la forme d'une rainure logeant l'organe mâle et formant avec celui-ci une liaison glissière dont la direction de glissière est parallèle ou inscrite dans le plan transversal dans lequel se trouve la structure transversale concernée.

De préférence, dans ledit autre dispositif de liaison, la rainure formant l'organe femelle présente, à l'une de ses deux extrémités longitudinales opposées selon la direction de glissière, une butée axiale de glissière coopérant avec l'une des deux extrémités longitudinales opposées de la saillie formant l'organe mâle. De plus, sur la seconde pièce, les deux butées axiales de glissière, respectivement prévues sur les deux liaisons glissières, sont orientées de manière à empêcher le déplacement de la première pièce relativement à la seconde pièce en direction de la troisième pièce, et de manière à empêcher le déplacement de la troisième pièce relativement à la seconde pièce en direction de la première pièce.

Ainsi, en cas de chute orientée parallèlement à la direction selon laquelle les trois pièces se succèdent, les deux butées axiales de glissière conduisent à mettre la seconde pièce en compression entre les première et troisième pièces, pour l'obtention d'une tenue mécanique renforcée de la structure transversale, et ainsi une meilleure garantie de maintien de ses pièces les unes par rapport aux autres.

De préférence, la structure transversale comporte un rapport entre son épaisseur, et sa largeur maximale dans le plan transversal dans lequel elle s'inscrit, inférieur à 0,1.

L'invention a également pour objet un colis, comprenant un emballage pour l'entreposage et/ou le transport d'assemblages de combustible nucléaire, ainsi qu'un dispositif de rangement tel que décrit ci-dessus, logé dans une cavité de l'emballage, ainsi que des assemblages de combustible nucléaire agencés dans le dispositif de rangement.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
[Fig. 1] représente une vue schématique en coupe d'un colis selon l'invention, comprenant en particulier un dispositif de rangement pour l'entreposage et/ou le transport d'assemblages de combustible nucléaire ;
[Fig. 2] représente une vue partielle en perspective du dispositif de rangement, selon un mode de réalisation préféré de la présente invention ;
[Fig. 2A] représente une vue partielle en perspective du dispositif de rangement montré sur la figure précédente, et sur laquelle la structure transversale du haut a été retirée ;
[Fig. 3] est une vue de dessus d'une structure transversale du dispositif de rangement montrée sur les figures 2 et 2A ;
[Fig. 4] est une vue éclatée en perspective de la structure transversale du dispositif de rangement montrée sur la figure précédente ;
[Fig. 5] est une vue en perspective d'une partie d'une première pièce de la structure transversale montrée sur la figure précédente ;
[Fig. 6] est une vue en perspective d'une partie d'une seconde pièce de la structure transversale montrée sur la figure précédente ;
[Fig. 7] représente une vue en perspective d'un dispositif de liaison entre les première et seconde pièces, avec la seconde pièce réalisée en filaire pour davantage de clarté ;
[Fig. 8] représente une vue en perspective d'un dispositif de liaison entre les première et seconde pièces, avec la première pièce réalisée en filaire pour davantage de clarté ;
[Fig. 9] représente une vue en coupe longitudinale du dispositif de liaison montré sur les figures 7 et 8 ;
[Fig. 10] représente une vue en coupe transversale du dispositif de liaison montré sur les figures 7 à 9 ;
[Fig. 11] représente une vue en coupe transversale similaire à celle de la figure 9, avec le dispositif de liaison se présentant sous la forme d'une alternative de réalisation ; et
[Fig. 12] représente une vue de dessus similaire à celle de la figure 3, montrant une partie seulement de la structure transversale du dispositif de rangement.

### EXPOSÉ DÉTAILLÉ DE MODES DE RÉALISATION PRÉFÉRÉS

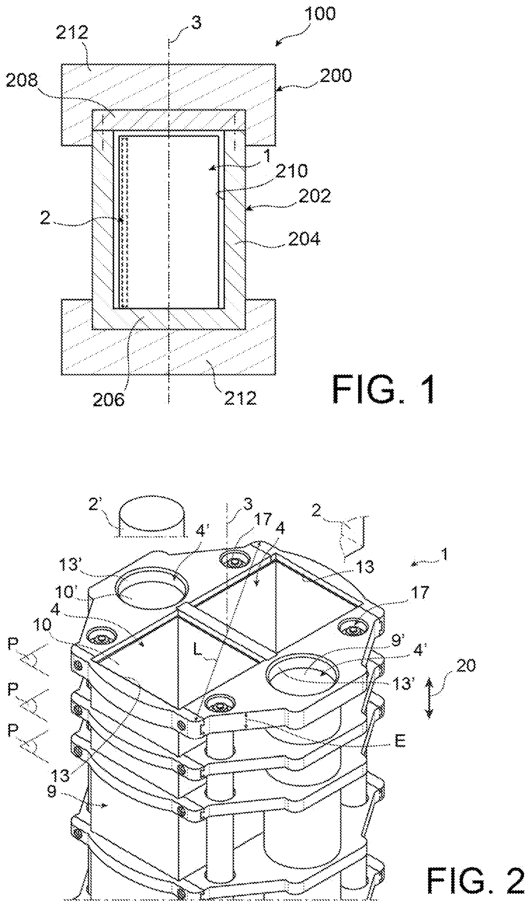

En référence à la figure 1, il est représenté un colis 100 comprenant un emballage 200 pour l'entreposage et/ou le transport d'assemblages des combustible nucléaire irradié 2. L'emballage 200 présente un corps 202 formé par un corps latéral 204, un fond 206, et un couvercle amovible 208. Le fond 206 et le couvercle 208 sont espacés l'un de l'autre selon l'axe central longitudinal 3 de l'emballage, autour duquel s'étend le corps latéral 204. L'emballage 200 définit à l'intérieur de son corps une cavité 210, dans laquelle se trouve logé un dispositif de rangement 1, qui sera dénommé « panier » dans la suite de la description. Le panier 1 complète ainsi l'emballage 200 pour former le colis 100, ce dernier étant chargé d'assemblages de combustible nucléaire. En effet, comme cela sera détaillé ci-après, le panier 1 comprend une pluralité de logements adjacents chacun destiné à recevoir l'un des assemblages de combustible nucléaire 2. Lorsque le panier 1 est logé dans la cavité 210 de l'emballage 200, et que les assemblages de combustible nucléaire 2 sont placés dans les logements adjacents du panier 1, le colis 100 est dit « chargé ».

A titre indicatif, il est noté qu'aux extrémités axiales de l'emballage, celui-ci peut présenter des capots amortisseurs de chocs 212, recouvrant respectivement le couvercle 208 et le fond 206 du corps 202 de cet emballage.

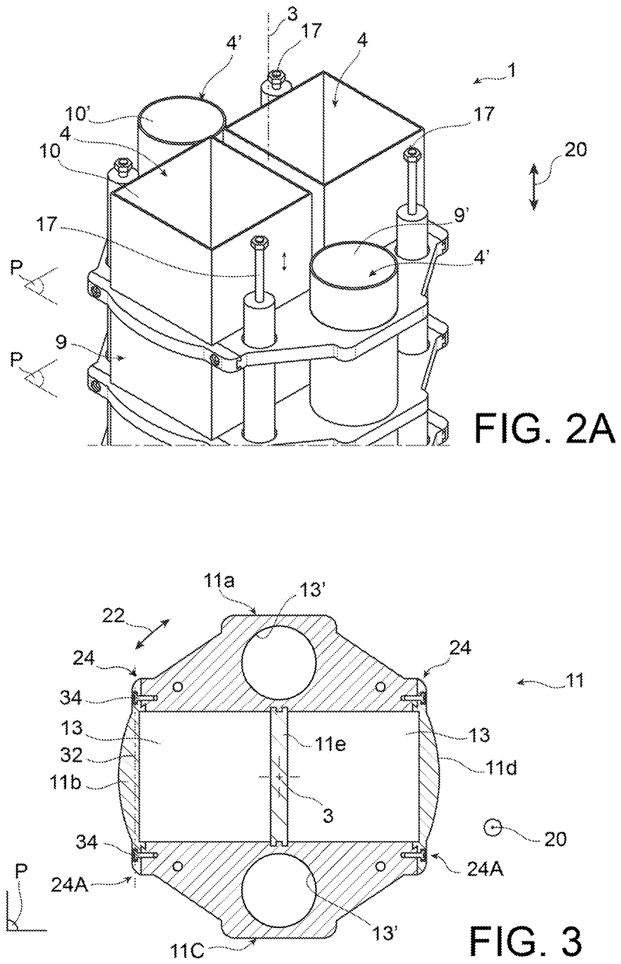

La particularité de l'invention réside dans la conception du panier 1 de transport et/ou entreposage d'assemblages de combustible nucléaire irradié, qui va à présent être décrite en référence tout d'abord aux figures 2 et 2A.

Le panier 1 comprend une pluralité de logements adjacents 4, 4' disposés parallèlement à l'axe 3, ce dernier correspondant également à l'axe central longitudinal du panier 1.

Le nombre N de logements adjacents est ici de quatre, mais ce nombre pourrait bien entendu différer.

Les deux logements 4 en vis-à-vis sont chacun apte à recevoir au moins un assemblage de combustible 2 de section carrée, et de préférence un seul. De ce fait, ils présentent chacun une surface intérieure de délimitation de logement 10, de section transversale de forme générale carrée ou rectangulaire. Par « surface intérieure de délimitation de logement 10 », il est entendu la surface des éléments de panier qui se trouve directement en regard de la surface extérieure des assemblages de combustible 2.

Les deux logements 4' en vis-à-vis sont aussi chacun apte à recevoir au moins un assemblage de combustible 2' de section circulaire, et de préférence un seul. De ce fait, ils présentent chacun une surface intérieure de délimitation de logement 10', de section transversale de forme générale circulaire. Ici également, par « surface intérieure de délimitation de logement 10' », il est entendu la surface des éléments de panier qui se trouve directement en regard de la surface extérieure des assemblages de combustible 2'.

Les logements 4, 4' sont donc prévus de manière à être juxtaposés les uns aux autres, ici tous à la périphérie du panier. Chaque logement 4, 4' est réalisé par une chemise 9, 9' parallèle à l'axe 3, et s'étendant préférentiellement sur toute la hauteur du panier 1 selon une direction longitudinale 20 de ce dernier, ou sensiblement sur toute cette hauteur. Chaque chemise 9, 9' est respectivement de section carrée/rectangulaire ou circulaire. Pour les chemises 9 de section carrée ou rectangulaire, celles-ci peuvent chacune être réalisée à l'aide de plusieurs plats assemblés les uns aux autres, par exemple quatre plats assemblés par entrecroisements. Le matériau utilisé pour fabriquer les chemises 9, 9' est choisi de façon à contribuer aux différentes fonctions que sont la fonction mécanique, la fonction thermique, et la fonction d'absorption neutronique Par exemple, il peut être retenu un matériau comme un alliage métallique comprenant du bore ou tout autre élément neutrophage, c'est-à-dire comprenant des éléments absorbeurs de neutrons. Par « éléments absorbeurs de neutrons », il est entendu des éléments qui présentent une section efficace supérieure à 100 barns pour les neutrons thermiques. A titre d'exemples indicatifs, il s'agit d'alliages d'aluminium comprenant du bore.

Pour compléter la conception du panier 1, ce dernier comporte une pluralité de structures transversales 11, espacées les unes des autres selon la direction 20. Les structures transversales 11 sont des structures planes ou sensiblement planes, chacune agencée dans un plan transversal P du panier 1, c'est-à-dire orthogonalement à l'axe 3. Les structures transversales 11 sont préférentiellement identiques ou sensiblement identiques, et elles présentent chacune une faible épaisseur, de préférence de sorte qu'un rapport entre son épaisseur « E », et sa largeur maximale « L » dans le plan transversal P dans lequel elle s'inscrit, soit inférieur à 0,1.

En forme générale de disque ou de galette, chacune de ces structures 11 présente quatre ouvertures traversantes 13, 13' pour la réception respectivement des quatre chemises 9, 9'. En d'autres termes, une même chemise 9, 9' traverse successivement une ouverture 13, 13' de chacune des galettes 11 du panier 1. Il en est de même pour les assemblages 2, 2', qui traversent successivement ces ouvertures 13, 13', en étant logées à l'intérieur des chemises 9, 9'. La forme des ouvertures 13, 13' est elle aussi complémentaire de celle des chemises qui les traversent. Par conséquent, les ouvertures traversantes 13 présentent une forme générale de section carrée ou rectangulaire, tandis que les ouvertures traversantes 13' présentent une forme générale de section circulaire.

Les galettes 11 sont par exemple réalisées en acier ou dans un alliage métallique, par exemple dans un alliage d'aluminium. Mais quel que soit le matériau retenu, celui-ci est préférentiellement dépourvu de bore ou de tout autre élément neutrophage au sens exposé précédemment.

Le nombre de galettes 11 est par exemple compris entre cinq et vingt, même si un nombre différent pourrait être adopté, notamment en fonction de la hauteur du panier 1, ici de l'ordre de 4 m.

Ces galettes 11 sont espacées longitudinalement les unes des autres à l'aide de moyens d'espacement, ici des entretoises 16, dont plusieurs d'entre elles sont agencées entre chaque couple de galettes 11 directement consécutives dans l'empilement selon la direction 20. Par exemple, ce sont trois à six entretoises 16 qui sont prévues à chaque étage d'espacement entre les galettes 11, les entretoises d'un même étage présentant de préférence toutes la même hauteur selon la direction 20. Les entretoises 16 sont préférentiellement réalisées en acier, mais d'autres matériaux peuvent être envisagés, sans sortir du cadre de l'invention.

La structure du panier 1 est complétée par des tirants 17 qui maintiennent en compression les galettes 11 et les entretoises 16 les unes contre les autres, selon la direction 20. Le maintien mécanique de l'empilement est ainsi assuré par les tirants 17 qui traversent les galettes 11, et éventuellement aussi les entretoises 16, en prévoyant une conception creuse pour ces dernières. Le nombre de tirants 17 peut alors être identique à celui des entretoises 16 prévues à chaque étage d'espacement des galettes, par exemple quatre entretoises / tirants dans le mode de réalisation représenté sur les figures 2 et 2A. Les tirants 17, de conception connue, sont préférentiellement parallèles à l'axe 3, ou sensiblement parallèles à ce dernier.

L'une des particularités de l'invention réside dans la conception des galettes transversales 11, dont l'une va être décrite à présent en référence aux figures 3 à 10.

La galette 11 est réalisée à l'aide de plusieurs pièces fixées les unes autres, toutes s'inscrivant dans le plan transversal P associé à cette galette. Dans le mode de réalisation préféré représenté, il est prévu quatre pièces périphériques assemblées bout-à-bout et se succédant donc selon une direction circonférentielle 22 du panier 1.

Il s'agit tout d'abord d'une première pièce périphérique 11a de forme générale trapézoïdale, ou en forme de lunule, et à travers laquelle est réalisée l'une des deux ouvertures 13' de section circulaire. Il est ensuite prévu une seconde pièce périphérique 11b en forme générale de poutre droite, ou éventuellement de lunule dont la partie bombée est peu accentuée. Il est également prévu une troisième pièce périphérique 11c de forme générale trapézoïdale, identique ou sensiblement identique à la première pièce 11a, en étant disposée en vis-à-vis et symétriquement à celle-ci. La troisième pièce périphérique 11c est traversée par l'autre des deux ouvertures 13' de section circulaire. Enfin, il est prévu une quatrième pièce périphérique 11d en forme générale de poutre droite, ou éventuellement de lunule, identique ou sensiblement identique à la seconde pièce 11b en étant disposée en vis-à-vis et symétriquement à celle-ci. Enfin, une cinquième pièce centrale 11e relie les premières et troisième pièces 11a, 11c, en étant agencée entre les seconde et quatrième pièces 11b, 11d, parallèlement à celles-ci.

Les pièces 11a et 11c, de plus grandes étendues transversales, sont celles destinées à coopérer avec les tirants et les entretoises du panier.

L'une des ouvertures 13 de section carrée / rectangulaire est délimitée par une partie de la première pièce 11a, par la seconde pièce 11b, par une partie de la troisième pièce 11c, et par une face de la cinquième pièce 11e. De même, l'autre ouverture 13 de section carrée / rectangulaire est délimitée par une autre partie de la première pièce 11a, par la quatrième pièce 11d, par une autre partie de la troisième pièce 11c, et par une face opposée de la cinquième pièce 11e.

Par la suite, il va être décrit la fixation entre les première et seconde pièces 11a, 11b, spécifique à l'invention, et dont le principe est préférentiellement appliqué de manière identique ou similaire pour les trois autres fixations entre les pièces périphériques 11a à 11d.

Toujours en référence aux figures 3 à 10, il est ainsi mis en œuvre un dispositif de liaison 24, rigide, entre la première pièce 11a et la seconde pièce 11b.

Le dispositif de liaison 24 comporte tout d'abord un organe mâle d'accouplement 26 porté par la première pièce 11a, en étant ici solidaire et préférentiellement réalisé d'une seule pièce avec cette première pièce 11a. L'organe mâle 26 prend la forme d'une saillie au niveau d'une extrémité de la première pièce 11a. Le dispositif de liaison 24 comprend également un organe femelle d'accouplement 28 prévu sur la seconde pièce, cet organe femelle prenant la forme d'une rainure logeant l'organe mâle 26 et formant avec celui-ci une liaison glissière dont la direction de glissière 30 est parallèle ou inscrite dans le plan transversal P dans lequel se trouve la structure transversale 11. Cette direction de glissière 30 est d'ailleurs confondue ou parallèle avec un axe central longitudinal 32 de la seconde pièce 11b, également inscrit dans le plan P.

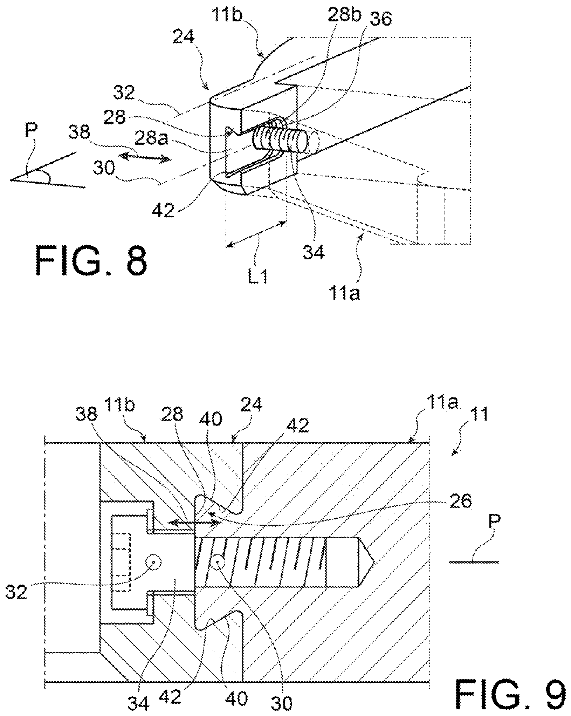

Grâce à l'orientation de cette liaison glissière, dans le plan P de la galette 11 ou parallèlement à ce même plan, la coopération entre ses organes mâle et femelle 26, 28 peut avantageusement s'étendre sur une longueur étendue qui renforce la résistance mécanique de la galette 11, en cas de chute du colis. En particulier, il est prévu que cette longueur de coopération L1, référencée sur la figure 8, soit strictement supérieure à l'épaisseur E des pièces 11a, 11b, correspondant à l'épaisseur de la galette 11. Préférentiellement, le dispositif de liaison 24 inclut un organe de verrouillage 34 de la liaison glissière, dont l'objectif est le maintien de l'organe mâle 26 relativement à l'organe femelle 28 dans la direction de glissière 30. Cet organe de verrouillage 34 évite ainsi un désengagement des deux organes, notamment pendant l'assemblage du panier, mais il est préférentiellement monté de manière à ne pas être ou peu sollicité en cas de chute, la reprise d'efforts s'effectuant prioritairement à l'aide des organes 26, 28. De préférence, l'organe de verrouillage 34 de la liaison glissière est une vis traversant les organes mâle et femelle 26, 28, en étant préférentiellement orthogonale à la direction de glissière 30, et parallèle ou inscrite dans le plan P.

La rainure 28 formant l'organe femelle présente une première et une seconde extrémités longitudinales 28a, 28b opposées selon la direction de glissière 30. La première extrémité 28a, correspondant à celle la plus extérieure et la plus éloignée de l'axe 3 du panier et de la galette, est ouverte pour l'introduction de la saillie 26. De même, cette saillie 26 présente une première et une seconde extrémités longitudinales 26a, 26b opposées selon la direction de glissière 30. L'introduction de cette saillie 26 dans la rainure 28 est prévue en faisant pénétrer la seconde extrémité 26b dans la rainure avant la première extrémité 26a. En revanche, pour renforcer encore davantage la résistance mécanique de la liaison glissière en cas de chute, la seconde extrémité 28b de la rainure 28 est obturée par une butée axiale de glissière 36 coopérant avec la seconde extrémité 26b de la saillie 26. Il est prévu un contact entre les deux, ou bien un très faible jeu selon la direction de glissière 30, destiné à être rapidement consommé en cas de chute pour obtenir un appui renforçant la résistance mécanique de la galette 11.

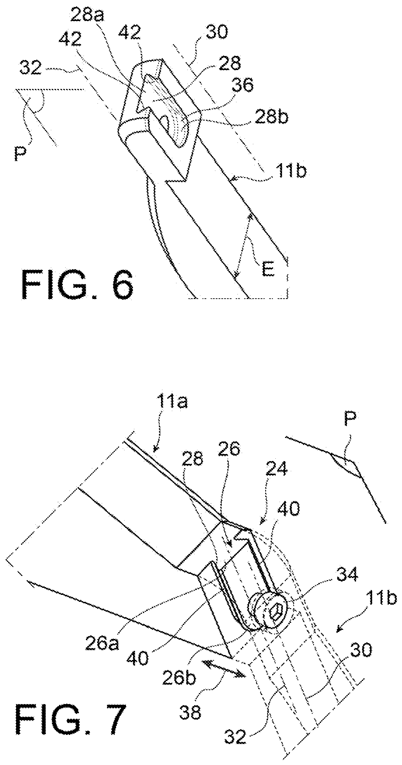

La butée axiale de glissière 36 et l'extrémité longitudinale associée 26b de la saillie 26 présentent une complémentarité de forme assurant le maintien de cette extrémité longitudinale 26b dans la rainure 28, selon une direction d'empilement des organes mâle et femelle d'accouplement 26, 28. Cette direction d'empilement, référencée 38 sur les figures 7 à 10, est orthogonale à la direction de glissière 30, et également orthogonale à un plan d'ouverture de la rainure. La complémentarité de forme assurant la rétention des deux éléments 26b, 36 peut être réalisée par une simple échancrure au niveau de l'extrémité 26b, de manière à coopérer avec une échancrure de forme complémentaire dans la butée axiale de glissière 36. Ici également, cette rétention améliore la résistance mécanique de la galette en cas de chute.

Si la liaison glissière peut être de conception unilatérale dans une direction d'empilement 38, par exemple avec une saillie 26 et une rainure 28 de formes parallélépipédiques complémentaires, cette liaison glissière est préférentiellement de conception bilatérale dans la direction d'empilement 38, toujours à des fins de renforcement de la résistance mécanique de la galette 11. Pour ce faire, la saillie 26 et la rainure 28 présentent une complémentarité de forme empêchant l'extraction de la saillie en dehors de la rainure via l'ouverture de celle-ci, selon la direction d'empilement 38. Cette complémentarité de forme est réalisée de préférence au niveau des deux flancs latéraux opposés 42 de la rainure 28, qui coopèrent respectivement avec deux flancs latéraux opposés 40 de la saillie 26, de manière à empêcher l'extraction de la saillie 26.

De préférence, il est prévu une échancrure au niveau de chacun des deux flancs latéraux opposés 40 de la saillie 26, cette échancrure étant identique ou similaire à celle réalisée au niveau de la seconde extrémité 26b de la saillie 26. Ainsi, la saillie 26 présente une section, dans un plan orthogonal à la direction de glissière 30 tel que le plan de coupe de la figure 9, en forme de queue d'aronde. Alternativement, d'autres formes de section capables d'assurer la rétention sont possibles, comme par exemple la forme de T, ou de tout ou partie d'un disque.

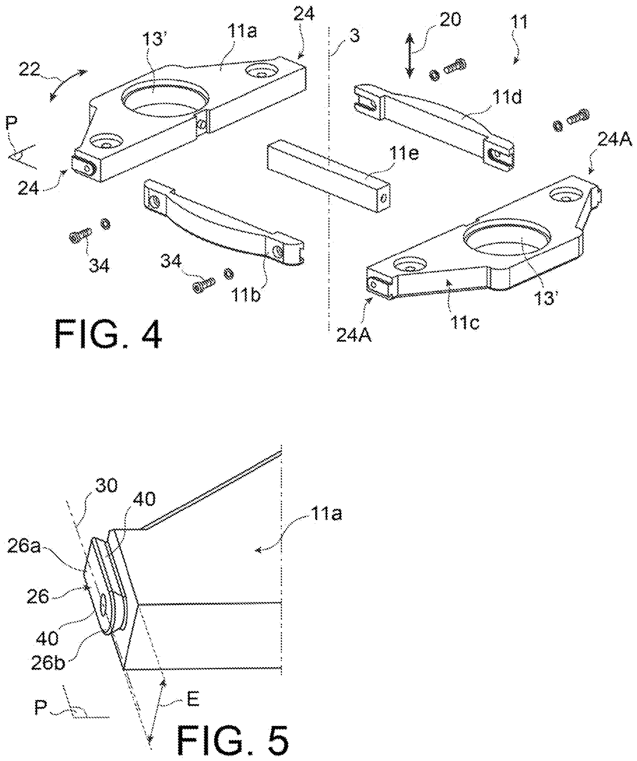

De cette manière, la seconde extrémité 26b de la saillie, ainsi que ses deux flancs latéraux opposés 40, présentent un profil continu tout le long d'un contour en U de la saillie 26, comme cela est le mieux visible sur les figures 5, 7 et 8. A titre d'exemple, lorsqu'une forme de queue d'aronde est retenue telle que montrée sur ces figures, chacun des deux flancs latéraux 40 est délardé de manière à faire apparaitre l'angle aigu requis pour l'obtention d'une telle forme en queue d'aronde, et ce même angle aigu est pratiqué à l'extrémité longitudinale 26b de la saillie afin d'assurer une continuité avec chacun des deux flancs latéraux 40, de même forme. Pour permettre cette continuité, l'extrémité 26b peut présenter des rayons de raccordement, ou bien être elle-même arrondie comme cela a été représenté sur les figures. Une telle réalisation avec une forme continue, qui se retrouve sur le contour en U de la rainure formée par les flancs latéraux 42 et la butée 36, facilite la fabrication des deux pièces 11a, 11b.

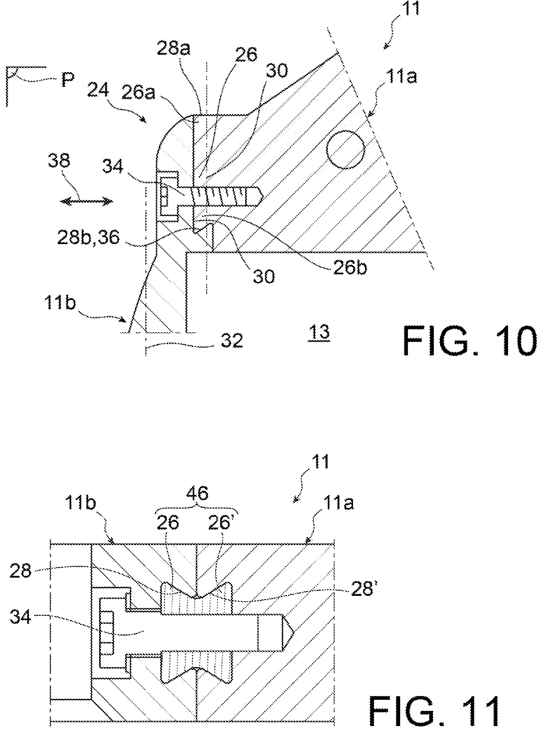

Il est noté que si la saillie 26 a été représentée comme intégrée à la première pièce 11a, et la rainure 28 intégrée à la seconde pièce 11b, une conception inversée peut être envisagée, sans sortir du cadre de l'invention. En outre, la figure 11 représente une alternative de réalisation dans laquelle la saillie 26, formant l'organe mâle de la liaison glissière, n'est plus réalisée d'un seul tenant avec la première pièce 11a. En effet, cet organe mâle 26 est porté différemment par la première pièce, puisqu'il est intégré à une pièce de jonction mécanique distincte 46 intégrant une autre saillie 26', coopérant avec une rainure 28' prévue sur la première pièce 11a. De cette manière, la coopération entre les saillie et rainure 26', 28' et identique ou similaire à la coopération entre les saillie et rainure 26, 28, formant ainsi deux liaisons glissières de directions parallèles. Dans cette alternative, la vis de verrouillage 34 traverse la seconde pièce 11b, puis les deux saillies 26, 26' de la pièce de jonction mécanique 46, et vient ensuite se visser dans la première pièce 11a.

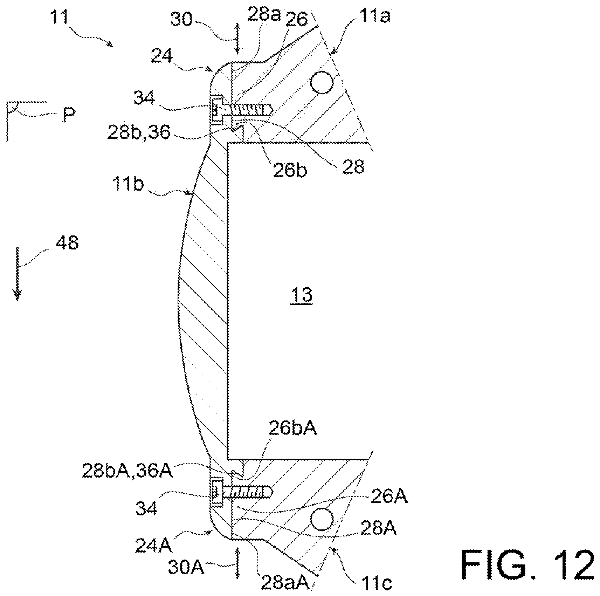

Dans la structure transversale 11, la seconde pièce 11b est agencée entre les première et troisième pièces 11a, 11c, la troisième pièce 11c étant en effet fixée à une extrémité opposée de seconde pièce 11b à l'aide d'un autre dispositif de liaison 24A, identique ou similaire au dispositif de liaison 24 entre les première et seconde pièces 11a, 11b. Cet autre dispositif de liaison 24A, qui ne sera pas décrit en détail en raison de son identité / sa similitude avec le dispositif 24, est représenté sur la figure 12.

Ainsi, cet autre dispositif de liaison 24A comporte en particulier un organe mâle d'accouplement 26A porté par la troisième pièce 11c, l'organe mâle prenant la forme d'une saillie, ainsi qu'un organe femelle d'accouplement 28A en forme de rainure prévue sur la seconde pièce 11b. Ici aussi, les deux organes 26A, 28A forment une liaison glissière dont la direction de glissière 30A est parallèle ou inscrite dans le plan transversal P, et également parallèle ou confondue avec la direction de glissière 30 de l'autre liaison glissière.

Dans cet autre dispositif de liaison 24A, la rainure 28A présente, à l'une 28bA de ses deux extrémités longitudinales opposées 28aA, 28bA selon la direction de glissière 30A, une butée axiale de glissière 36A coopérant avec l'une 26bA des deux extrémités longitudinales opposées de la saillie 26A. De plus, sur la seconde pièce 11b, les deux butées axiales de glissière 36, 36A sont orientées de manière à empêcher le déplacement de la première pièce 11a relativement à la seconde pièce 11b en direction de la troisième pièce 11c, et de manière à empêcher le déplacement de la troisième pièce 11c relativement à la seconde pièce 11b en direction de la première pièce 11a.

Par conséquent, en cas de chute avec le panier orienté horizontalement, et avec une direction de chute 48 orientée parallèlement à la direction selon laquelle les trois pièces 11a, 11b, 11c se succèdent (comme sur la figure 12), les deux butées axiales de glissière 36, 36A conduisent à mettre la seconde pièce 11b en compression entre les première et troisième pièces 11a, 11c, sous les actions opposées des deux extrémités de saillie 26b, 26bA. Cela contribue à l'obtention d'une tenue mécanique renforcée de la galette 11, et ainsi à une meilleure garantie de maintien de ses pièces les unes par rapport aux autres en cas de chute du colis.

Quelle que soit la direction de chute et l'orientation du colis, comme par exemple la chute axiale, la chute latérale sur axe normal, ou encore la chute latérale sur axe oblique (par exemple à 45°), les dispositifs de liaison 24, 24A permettent de bénéficier d'une résistance mécanique élevée au moment de l'impact. Ces mêmes dispositifs de liaison 24, 24A sont par ailleurs de préférence mis en œuvre de manière identique ou similaire, respectivement entre les première et quatrième pièces 11a, 11d, et entre les troisième et quatrième pièces 11c, 11d.

Bien entendu, diverses modifications peuvent être apportées par l'homme du métier aux dispositifs de rangement 1 qui viennent d'être décrits, uniquement à titre d'exemples non limitatifs, et dont la portée est définie par les revendications annexées.

## Revendications

1. Dispositif de rangement (1) pour le transport et/ou l'entreposage d'assemblages de combustible nucléaire (2, 2'), le dispositif de rangement étant destiné à être logé dans la cavité (210) d'un emballage (200) pour le transport et/ou l'entreposage d'assemblages de combustible nucléaire, et comportant des logements adjacents (4, 4'), chacun destiné à recevoir un assemblage de combustible nucléaire (2, 2'),
le dispositif de rangement comprenant une pluralité de structures transversales (11) espacées les unes des autres selon une direction longitudinale (20) du dispositif de rangement à l'aide de moyens d'espacement (16), les structures transversales (11) étant chacune agencée dans un plan transversal (P) du dispositif de rangement, et comprenant chacune plusieurs ouvertures traversantes (13, 13') pour le passage des assemblages de combustible nucléaire,
**caractérisé en ce qu'**au moins l'une des structures transversales (11) comporte une première pièce (11a) ainsi qu'une seconde pièce (11b) fixées l'une à l'autre par un dispositif de liaison (24), le dispositif de liaison comprenant :
- un organe mâle d'accouplement (26) porté par la première pièce (11a), l'organe mâle prenant la forme d'une saillie ;
- un organe femelle d'accouplement (28) prévu sur la seconde pièce (11b), l'organe femelle prenant la forme d'une rainure logeant l'organe mâle et formant avec celui-ci une liaison glissière dont la direction de glissière (30) est parallèle ou inscrite dans le plan transversal (P) dans lequel se trouve la structure transversale concernée.

2. Dispositif de rangement selon la revendication 1, **caractérisé en ce que** la rainure (28) formant l'organe femelle présente, à l'une (28b) de ses deux extrémités longitudinales opposées selon la direction de glissière (30), une butée axiale de glissière (36) coopérant avec l'une (26b) des deux extrémités longitudinales opposées de la saillie (26) formant l'organe mâle.

3. Dispositif de rangement selon la revendication 2, **caractérisé en ce que** la butée axiale de glissière (36) et l'extrémité longitudinale associée (26b) de la saillie présentent une complémentarité de forme assurant le maintien de l'extrémité longitudinale (26b) de la saillie dans la rainure (28), selon une direction (38) d'empilement des organes mâle et femelle d'accouplement (26, 28), la direction d'empilement étant orthogonale à la direction de glissière (30) ainsi qu'à un plan d'ouverture de la rainure.

4. Dispositif de rangement selon l'une quelconque des revendications précédentes, **caractérisé en ce que** la liaison glissière est de conception unilatérale dans une direction d'empilement (38) des organes mâle et femelle d'accouplement (26, 28), ces derniers présentant de préférence des formes parallélépipédiques.

5. Dispositif de rangement selon l'une quelconque des revendications 1 à 3, **caractérisé en ce que** la liaison glissière est de conception bilatérale dans une direction d'empilement (38) des organes mâle et femelle d'accouplement (26, 28), la saillie et la rainure présentant une complémentarité de forme empêchant l'extraction de la saillie (26) en dehors de la rainure (28) via l'ouverture de celle-ci, selon la direction d'empilement (38) des organes mâle et femelle.

6. Dispositif selon la revendication 5, **caractérisé en ce que** la saillie présente deux flancs latéraux opposés (40) présentant une complémentarité de forme avec deux flancs latéraux opposés (42) de la rainure avec lesquels ils coopèrent respectivement, de manière à empêcher l'extraction de la saillie (26) en dehors de la rainure (28) via l'ouverture de celle-ci, dans la direction d'empilement (38) des organes mâle et femelle.

7. Dispositif selon la revendication 6, **caractérisé en ce que** la saillie (26) présente une section, dans un plan orthogonal à la direction de glissière, en forme de queue d'aronde, de T, ou de tout ou partie d'un disque.

8. Dispositif selon la revendication 6 ou 7 combinée à la revendication 3, **caractérisé en ce que** ladite extrémité longitudinale (26b) de la saillie (26), ainsi que ses deux flancs latéraux opposés (40), présentent un profil continue tout le long d'un contour en U de la saillie (26).

9. Dispositif de rangement selon l'une quelconque des revendications précédentes, **caractérisé en ce qu'**il comprend un organe de verrouillage (34) de la liaison glissière, maintenant l'organe mâle (26) relativement à l'organe femelle (28) dans la direction de glissière (30), l'organe de verrouillage (34) de la liaison glissière étant préférentiellement une vis traversant les organes mâle et femelle (26, 28).

10. Dispositif de rangement selon l'une quelconque des revendications précédentes, **caractérisé en ce que** les première et seconde pièces (11a, 11b) sont deux pièces périphériques de la structure transversale (11), et, de préférence, délimitant en partie au moins l'une des ouvertures traversantes (13) de cette structure transversale.

11. Dispositif de rangement selon l'une quelconque des revendications précédentes, **caractérisé en ce que** la première ou la seconde pièce (11a, 11b) présente une forme générale de poutre droite, dont l'axe central longitudinal de poutre (32) est parallèle ou confondu avec la direction de glissière (30).

12. Dispositif de rangement selon l'une quelconque des revendications précédentes, **caractérisé en ce que** ladite structure transversale (11) comporte une troisième pièce (11c) agencée de sorte que la seconde pièce (11b) soit située entre les première et troisième pièces (11a, 11c) qu'elle relie à l'aide d'un autre dispositif de liaison (24A), cet autre dispositif de liaison comprenant :
- un organe mâle d'accouplement (26A) porté par la troisième pièce (11c), l'organe mâle prenant la forme d'une saillie ;
- un organe femelle d'accouplement (28A) prévu sur la seconde pièce (11b), l'organe femelle prenant la forme d'une rainure logeant l'organe mâle et formant avec celui-ci une liaison glissière dont la direction de glissière (30A) est parallèle ou inscrite dans le plan transversal (P) dans lequel se trouve la structure transversale concernée.

13. Dispositif de rangement selon la revendication 12, **caractérisé en ce que** dans ledit autre dispositif de liaison (24A), la rainure (28A) formant l'organe femelle présente, à l'une (28bA) de ses deux extrémités longitudinales opposées selon la direction de glissière (30A), une butée axiale de glissière (36A) coopérant avec l'une (26bA) des deux extrémités longitudinales opposées de la saillie (26A) formant l'organe mâle, et **en ce que** sur la seconde pièce (11b), les deux butées axiales de glissière (36, 36A), respectivement prévues sur les deux liaisons glissières, sont orientées de manière à empêcher le déplacement de la première pièce (11a) relativement à la seconde pièce (11b) en direction de la troisième pièce (11c), et de manière à empêcher le déplacement de la troisième pièce (11c) relativement à la seconde pièce (11b) en direction de la première pièce (11a).

14. Dispositif de rangement selon l'une quelconque des revendications précédentes, **caractérisé en ce que** la structure transversale (11) comporte un rapport entre son épaisseur (E), et sa largeur maximale (L) dans le plan transversal (P) dans lequel elle s'inscrit, inférieur à 0,1.

15. Colis (100) comprenant un emballage (200) pour l'entreposage et/ou le transport d'assemblages de combustible nucléaire, ainsi qu'un dispositif de rangement (1) selon l'une quelconque des revendications précédentes, logé dans une cavité (210) de l'emballage, ainsi que des assemblages de combustible nucléaire agencés dans le dispositif de rangement.

## Patentansprüche

1. Aufbewahrungsvorrichtung (1) für den Transport und/oder die Lagerung von Kernbrennstoffbaugruppen (2, 2'), wobei die Aufbewahrungsvorrichtung dazu bestimmt ist, in dem Hohlraum (210) einer Verpackung (200) für den Transport und/oder die Lagerung von Kernbrennstoffbaugruppen untergebracht zu werden, und benachbarte Aufnahmen (4, 4') umfasst, die jeweils dazu bestimmt sind, eine Kernbrennstoffbaugruppe (2, 2') aufzunehmen, wobei die Aufbewahrungsvorrichtung eine Vielzahl von Querstrukturen (11) umfasst, die in einer Längsrichtung (20) der Aufbewahrungsvorrichtung mithilfe von Abstandsmitteln (16) voneinander beabstandet sind, wobei die Querstrukturen (11) jeweils in einer Querebene (P) der Aufbewahrungsvorrichtung angeordnet sind und jeweils mehrere Durchgangsöffnungen (13, 13') für die Durchführung der Kernbrennstoffbaugruppen umfassen, **dadurch gekennzeichnet, dass** mindestens eine der Querstrukturen (11) ein erstes Teil (11a) sowie ein zweites Teil (11b) umfasst, die durch eine Verbindungsvorrichtung (24) aneinander befestigt sind, wobei die Verbindungsvorrichtung Folgendes umfasst:
- ein Stecker-Kupplungselement (26), das von dem ersten Teil (11a) getragen wird, wobei das Stecker-Element die Form eines Vorsprungs annimmt;
- ein Buchsen-Kupplungselement (28), das an dem zweiten Teil (11b) vorgesehen ist, wobei das Buchsen-Element die Form einer Nut annimmt, die das Stecker-Element aufnimmt und mit diesem eine Gleitverbindung bildet, deren Gleitrichtung (30) parallel ist oder in der Querebene (P), in der sich die betreffende Querstruktur befindet, eingefügt ist.

2. Aufbewahrungsvorrichtung nach Anspruch 1, **dadurch gekennzeichnet, dass** die Nut (28), die das Buchsen-Element bildet, an einem (28b) ihrer beiden gegenüberliegenden Längsenden in der Gleitrichtung (30) einen axialen Gleitanschlag (36) aufweist, der mit einem (26b) der beiden gegenüberliegenden Längsenden des Vorsprungs (26), der das Stecker-Element bildet, zusammenwirkt.

3. Aufbewahrungsvorrichtung nach Anspruch 2, **dadurch gekennzeichnet, dass** der axiale Gleitanschlag (36) und das zugehörige Längsende (26b) des Vorsprungs eine Formkomplementarität aufweisen, die das Halten des Längsendes (26b) desWO 2023/026013 PCT/FR2022/051604 Vorsprungs in der Nut (28) in einer Stapelrichtung (38) des Stecker- und des Buchsen-Kupplungselements (26, 28) sicherstellt, wobei die Stapelrichtung orthogonal zur Gleitrichtung (30) sowie zu einer Öffnungsebene der Nut ist.

4. Aufbewahrungsvorrichtung nach einem der vorhergehenden Ansprüche, **dadurch gekennzeichnet, dass** die Gleitverbindung einseitig in einer Stapelrichtung (38) des Stecker- und des Buchsen-Kupplungselements (26, 28) ausgebildet ist, wobei diese vorzugsweise parallelepipedische Formen aufweisen.

5. Aufbewahrungsvorrichtung nach einem der Ansprüche 1 bis 3, **dadurch gekennzeichnet, dass** die Gleitverbindung beidseitig in einer Stapelrichtung (38) des Stecker- und des Buchsen-Kupplungselements (26, 28) ausgebildet ist, wobei der Vorsprung und die Nut eine Formkomplementarität aufweisen, die das Herausziehen des Vorsprungs (26) aus der Nut (28) über deren Öffnung in der Stapelrichtung (38) des Stecker- und des Buchsen-Elements verhindert.

6. Vorrichtung nach Anspruch 5, **dadurch gekennzeichnet, dass** der Vorsprung zwei gegenüberliegende Seitenflanken (40) aufweist, die eine Formkomplementarität mit zwei gegenüberliegenden Seitenflanken (42) der Nut aufweisen, mit denen sie jeweils zusammenwirken, um zu verhindern, dass der Vorsprung (26) aus der Nut (28) über deren Öffnung in Stapelrichtung (38) des Stecker- und des Buchsen-Elements herausgezogen wird.

7. Vorrichtung nach Anspruch 6, **dadurch gekennzeichnet, dass** der Vorsprung (26) in einer orthogonal zu der Gleitrichtung liegenden Ebene einen schwalbenschwanzförmigen, T-förmigen oder ganzen oder teilweisen Abschnitt einer Scheibe aufweist.

8. Vorrichtung nach Anspruch 6 oder 7 in Kombination mit Anspruch 3, **dadurch gekennzeichnet, dass** das Längsende (26b) des Vorsprungs (26) sowie seine beiden gegenüberliegenden Seitenflanken (40) ein durchgehendes Profil entlang einer U-förmigen Kontur des Vorsprungs (26) aufweisen.

9. Aufbewahrungsvorrichtung nach einem der vorhergehenden Ansprüche, **dadurch gekennzeichnet, dass** sie ein Verriegelungselement (34) der Gleitverbindung umfasst, das das Stecker-Element (26) relativ zum Buchsen-Element (28) in der Gleitrichtung (30) hält, wobei das Verriegelungselement (34) der Gleitverbindung vorzugsweise eine Schraube ist, die durch das Stecker- und das Buchsen-Element (26, 28) verläuft.WO 2023/026013 PCT/FR2022/051604

10. Aufbewahrungsvorrichtung nach einem der vorhergehenden Ansprüche, **dadurch gekennzeichnet, dass** das erste und das zweite Teil (11a, 11b) zwei periphere Teile der Querstruktur (11) sind und, vorzugsweise, mindestens eine der Durchgangsöffnungen (13) dieser Querstruktur teilweise begrenzen.

11. Aufbewahrungsvorrichtung nach einem der vorhergehenden Ansprüche, **dadurch gekennzeichnet, dass** das erste oder das zweite Teil (11a, 11b) eine allgemeine Form eines geraden Trägers aufweist, deren Längsmittelachse des Trägers (32) parallel zur Gleitrichtung (30) ist oder mit dieser zusammenfällt.

12. Aufbewahrungsvorrichtung nach einem der vorhergehenden Ansprüche, **dadurch gekennzeichnet, dass** die Querstruktur (11) ein drittes Teil (11c) umfasst, das so angeordnet ist, dass das zweite Teil (11b) zwischen dem ersten und dem dritten Teil (11a, 11c) liegt, die es mithilfe einer anderen Verbindungsvorrichtung (24A) verbindet, wobei diese andere Verbindungsvorrichtung Folgendes umfasst:
- ein Stecker-Kupplungselement (26A), das von dem dritten Teil (11c) getragen wird, wobei das Stecker-Element die Form eines Vorsprungs annimmt;
- ein Buchsen-Kupplungselement (28A), das an dem zweiten Teil (11b) vorgesehen ist, wobei das Buchsen-Element die Form einer Nut annimmt, die das Stecker-Element aufnimmt und mit diesem eine Gleitverbindung bildet, deren Gleitrichtung (30A) parallel ist oder in der Querebene (P), in der sich die betreffende Querstruktur befindet, eingefügt ist.

13. Aufbewahrungsvorrichtung nach Anspruch 12, **dadurch gekennzeichnet, dass** in der anderen Verbindungsvorrichtung (24A) die Nut (28A), die das Buchsen-Element bildet, an einem (28bA) ihrer beiden gegenüberliegenden Längsenden in der Gleitrichtung (30A) einen axialen Gleitanschlag (36A) aufweist, der mit einem (26bA) der beiden gegenüberliegenden Längsenden des Vorsprungs (26A), der das Stecker-Element bildet, zusammenwirkt, und dadurch, dass am zweiten Teil (11b) die beiden axialen Gleitanschläge (36, 36A), die jeweils an den beiden Gleitverbindungen vorgesehen sind, so ausgerichtet sind, dass sie die Bewegung des ersten Teils (11a) relativ zum zweiten Teil (11b) in Richtung des dritten Teils (11c) verhindern und die Bewegung des dritten Teils (11c) relativ zum zweiten Teil (11b) in Richtung des ersten Teils (11a) verhindern.4 - 1/7 PCT/FR2022/051604

14. Aufbewahrungsvorrichtung nach einem der vorhergehenden Ansprüche, **dadurch gekennzeichnet, dass** die Querstruktur (11) ein Verhältnis zwischen ihrer Dicke (E) und ihrer maximalen Breite (L) in der Querebene (P), in die sie sich einfügt, von weniger als 0,1 aufweist.

15. Paket (100), umfassend eine Verpackung (200) zur Lagerung und/oder zum Transport von Kernbrennstoffbaugruppen sowie eine Aufbewahrungsvorrichtung (1) nach einem der vorhergehenden Ansprüche, die in einem Hohlraum (210) der Verpackung untergebracht ist, sowie in der Aufbewahrungsvorrichtung angeordnete Kernbrennstoffbaugruppen.

## Claims

1. Storage device (1) for transporting and/or storing nuclear fuel assemblies (2, 2'), the storage device being intended to be housed in the cavity (210) of a packaging (200) for transporting and/or storing nuclear fuel assemblies, and including adjacent housings (4, 4'), each intended to receive a nuclear fuel assembly (2, 2'),
The storage device comprising a plurality of transverse structures (11) spaced apart from one another in a longitudinal direction (20) of the storage device using spacing means (16), the transverse structures (11) each being arranged in a transverse plane (P) of the storage device, and each comprising a plurality of through-openings (13, 13') for passing nuclear fuel assemblies through,
**characterised in that** at least one of the transverse structures (11) includes a first component (11a) as well as a second component (11b) attached to one another by a connecting device (24), the connecting device comprising:
- a male coupling member (26) borne by the first component (11a), the male member taking the form of a projection;
- a female coupling member (28) provided on the second component (11b), the female member taking the form of a groove housing the male member and forming therewith a guideway connection the direction of the guideway (30) of which is parallel to or inscribed in the transverse plane (P) wherein the transverse structure concerned lies.

2. Storage device according to claim 1, **characterised in that** the groove (28) forming the female member has, at one (28b) of its two opposite longitudinal ends in the direction of the guideway (30), a guideway axial abutment (36) cooperating with one (26b) of the two opposite longitudinal ends of the projection (26) forming the male member.

3. Storage device according to claim 2, **characterised in that** the guideway axial abutment (36) and the associated longitudinal end (26b) of the projection have a complementarity of shape ensuring the holding of the longitudinal end (26b) of the projection in the groove (28), in a stacking direction (38) of the male and female coupling members (26, 28), the stacking direction being orthogonal to the direction of the guideway (30) as well as to an opening plane of the groove.

4. Storage device according to any one of the preceding claims, **characterised in that** the guideway connection is of unilateral design in a stacking direction (38) of the male and female coupling members (26, 28), the latter preferably having parallelepiped shapes.

5. Storage device according to any one of claims 1 to 3, **characterised in that** the guideway connection is of bilateral design in a stacking direction (38) of the male and female coupling members (26, 28), the projection and the groove having a complementarity of shape preventing the extraction of the projection (26) outside of the groove (28) via the opening thereof, in the stacking direction (38) of the male and female components.

6. Device according to claim 5, **characterised in that** the projection has two opposite lateral sides (40) having a complementarity of shape with two opposite lateral sides (42) of the groove with which they respectively cooperate, so as to prevent the extraction of the projection (26) outside of the groove (28) via the opening thereof, in the stacking direction (38) of the male and female members.

7. Device according to claim 6, **characterised in that** the projection (26) has a section, in a plane orthogonal to the direction of the guideway, in the shape of a dovetail, of a T, or of all or part of a disc.

8. Device according to claim 6 or 7 combined with claim 3, **characterised in that** said longitudinal end (26b) of the projection (26), as well as its two opposite lateral sides (40), have a continuous profile along the entire length of a U-shaped contour of the projection (26).

9. Storage device according to any one of the preceding claims, **characterised in that** it comprises a member for locking (34) the guideway connection, holding the male member (26) relative to the female member (28) in the direction of the guideway (30), the member for locking (34) the guideway connection preferably being a screw passing through the male and female members (26, 28).

10. Storage device according to any one of the preceding claims, **characterised in that** the first and second components (11a, 11b) are two peripheral components of the transverse structure (11), and, preferably, partly delimiting at least one of the through-openings (13) of this transverse structure.

11. Storage device according to any one of the preceding claims, **characterised in that** the first or the second component (11a, 11b) has a generally straight beam shape, of which the longitudinal central axis of the beam (32) is parallel to or coinciding with the direction of the guideway (30).

12. Storage device according to any one of the preceding claims, **characterised in that** said transverse structure (11) includes a third component (11c) arranged so that the second component (11b) is located between the first and third components (11a, 11c) that it connects using another connecting device (24A), this other connecting device comprising:
- a male coupling member (26A) borne by the third component (11c), the male member taking the form of a projection;
- a female coupling member (28A) provided on the second component (11b), the female member taking the form of a groove housing the male member and forming therewith a guideway connection the direction of the guideway (30A) of which is parallel to or inscribed in the transverse plane (P) wherein the transverse structure concerned lies.

13. Storage device according to claim 12, **characterised in that** in said other connecting device (24A), the groove (28A) forming the female member has, at one (28bA) of its two opposite longitudinal ends in the direction of the guideway (30A), a guideway axial abutment (36A) cooperating with one (26bA) of the two opposite longitudinal ends of the projection (26A) forming the male member, and **in that** on the second component (11b), the two guideway axial abutments (36, 36A), respectively provided on the two guideway connections, are oriented so as to prevent the movement of the first component (11a) relative to the second component (11b) in the direction of the third component (11c), and so as to prevent the movement of the third component (11c) relative to the second component (11b) in the direction of the first component (11a).

14. Storage device according to any one of the preceding claims, **characterised in that** the transverse structure (11) includes a ratio between its thickness (E), and its maximum width (L) in the transverse plane (P) wherein it is inscribed, less than 0.1.

15. Package (100) comprising a packaging (200) for storing and/or transporting nuclear fuel assemblies, as well as a storage device (1) according to any one of the preceding claims, housed in a cavity (210) of the packaging, as well as nuclear fuel assemblies arranged in the storage device.
